Europäisches Patentamt

European Patent Office

Office européen des brevets

(11) Veröffentlichungsnummer: **0 637 730 A1**

## (12) EUROPÄISCHE PATENTANMELDUNG

(21) Anmeldenummer: **94111913.3**

(51) Int. Cl.⁶: **G01D 5/38**, G01D 5/34

(22) Anmeldetag: **29.07.94**

(30) Priorität: **31.07.93 DE 9311472 U**

(43) Veröffentlichungstag der Anmeldung:
**08.02.95 Patentblatt 95/06**

(84) Benannte Vertragsstaaten:
**AT BE CH DE DK ES FR GB GR IE IT LI LU MC NL PT SE**

(71) Anmelder: **MAZ MIKROELECTRONIK ANWENDUNGSZENTRUM HAMBURG GMBH**
**Karnapp 20**
**D-21079 Hamburg (DE)**
Anmelder: **UCS-INDUSTRIEELEKTRONIK GMBH**

Rissener Strasse 102
**D-22880 Wedei (DE)**

(72) Erfinder: **Grigat, Rolf-Rainer, Prof. Dr.-Ing.**
**Holunderweg 11**
**D-25469 Halstenbek (DE)**
Erfinder: **Schmücker, Ulrich**
**Tarpenbekstrasse 51**
**D-20251 Hamburg (DE)**

(74) Vertreter: **DIEHL GLAESER HILTL & PARTNER**
**Patentanwälte**
**Königstrasse 28**
**D-22767 Hamburg (DE)**

(54) Winkelkodierer bzw. Winkelstellungsgeber bzw. Drehimpulsgeber.

(57) Die Erfindung bezieht sich auf eine Scheibe mit Rasterstrukturen zur Abtastung durch ein Lichtkegel. Für jede Position bzw. für jedes Bit ist ein Rasterfeld vorgesehen, dessen Rasterstruktur feiner als der Strahldurchmesser des auslesenden Lichtstrahls ist. Die Rasterfelder sind jeweils in einer von zwei möglichen Streifentexturen für die logischen Zustände 1 und 0 ausgebildet, wobei diese Strukturen sich in ihren Eigenschaften bezüglich Interferenz und/oder Beugung deutlich voneinander unterscheiden, so daß Winkelpositionen auch bei ruhenden Scheibe festgestellt werden können.

Fig. 5

EP 0 637 730 A1

Die Erfindung bezieht sich auf Winkelkodierer, Winkelstellungsgeber bzw. Drehimpulsgeber, die im wesentlichen aus einer Scheibe mit Rasterstrukturen bestehen.

Gesucht ist ein Meßverfahren zur Bestimmung der Winkelposition an rotationsfähigen Achsen mit folgenden Eigenschaften:

Die Auflösung soll mindestens 32.000 Winkelschritte pro Umdrehung betragen.

Die Winkelposition soll bestimmbar sein, ohne daß das Meßobjekt nach Einschalten der Energiezufuhr des Sensors bewegt wird (absolute Winkelmessung).

Die Winkelposition soll bei ruhendem und auch bei rotierendem Meßobjekt bestimmbar sein.

Zu diesem Zweck werden die Winkelstellungen auf einem rotierfähigen Körper (z. B. einer Scheibe) geeignet kodiert und durch ein gegenüber dem rotierenden Körper angeordnetes ruhendes optisches Sensorsystem ausgelesen und dekodiert. Aufgrund der hohen Winkelauflösung liegen die geometrischen Abmessungen der Markierungen des Kodes im Bereich der Lichtwellenlänge. Für die Auslesung des Kodes kommen daher als Weiterentwicklung der bekannten Kodierscheiben Beugungs- und Interferenzprinzipien bei Beleuchtung mit kohärentem Licht in Frage.

Der verstärkte Einsatz leistungsfähiger digitaler Datenverarbeitungssysteme, die aufgrund gestiegener Genauigkeits- und Geschwindigkeitsanforderungen der Betriebe (Produktion, Förderung und Lagerung) entwickelt wurden, erfordern auch die schnelle und genaue Erfassung von Winkeln. Die bei der Erfassung gemessenen Werte müssen verzögerungsfrei in digitaler Form der nachgeschalteten Regelung als Istwert zur Verfügung gestellt werden.

Geeignete Sensoren für diese Aufgabe sind Drehimpulsgeber, die für jede Lageänderung eine bestimmte Anzahl von Impulsen abgeben.

Stand der Technik in den heutigen Bauausführungen von Drehimpulsgebern sind opto-elektronische oder induktive Abtastsysteme. Je nach Aufgabenstellung unterscheiden sich sogenannte inkrementale Drehimpulsgeber in den Ausführungen einkanalig, zweikanalig und dreikanalig. Für jeden Ausgang (Kanal) ist ein optisches Abtastsystem erforderlich, welches abhängig von der Teilung der Kodierscheibe bei Drehung des Impulsgebers Signale zum Ausgang leitet.

Aufgrund des Durchmessers der Kodierscheibe sowie der maximalen Auflösung der Abtastsysteme ist auch die maximale Impulszahl je Umdrehung des Drehimpulsgebers vorgegeben. Sie liegt bei üblichen Bauformen von etwa 80 mm bei ca. 5000 Impulsen pro Umdrehung. Höhere Auflösungen sind nur durch spezielle Verfahren (Interferenzgitter etc.) möglich. Diese Verfahren benötigen einen großen technischen Aufwand und sind somit von der Bauart größer und wesentlich teurer.

Ein weiteres bekanntes Verfahren ist die Verwendung einer Audio-CD. Diese besitzt Vertiefungen der Tiefe $\lambda/4$, wobei der Strahldurchmesser nicht größer als der Querschnitt einer Vertiefung werden darf. Bei Eintritt des Strahls in eine Vertiefung und bei Verlassen einer Vertiefung ergibt sich destruktive Interferenz, da die eine Hälfte des Strahls an der Scheibenoberfläche reflektiert wird und die andere Hälfte dagegen durch Reflektion am Vertiefungsboden einen um $2\lambda/4 = \lambda/2$ größeren Lichtweg aufweist. Dieses Prinzip ist für Absolutwinkelmessungen nicht geeignet, da nur an Vertiefungskanten die kodierte Information ausgelesen werden kann.

Problemstellung der Erfindung:

Die Winkelstellung muß in jeder Position der ruhenden und bewegten Kodierscheibe ohne jegliche Vorinformation über benachbarte Winkelzustände oder über die Historie unmittelbar fehlerfrei ermittelt werden können.

Dieses Problem wird durch die kennzeichnenden Merkmale der Ansprüche gelöst.

Jedes Bit wird demnach in einem Rasterfeld kodiert, wobei die Rasterstruktur feiner als der Strahldurchmesser des auslesenden Lichtstrahls sein muß. Die Rasterfelder werden jeweils in einer von zwei möglichen Texturen ausgebildet für die beiden logischen Zustände I und O. Diese beiden Texturen müssen sich deutlich in ihren Eigenschaften bezüglich Interferenz und/oder Beugung unterscheiden. Eine der Alternativen besteht in einer planaren Fläche für Zustand O und in einem Gittermuster für Zustand I.

Die Herstellung der Rasterfelder ist aufgrund ihrer Strukturgröße im Bereich der Lichtwellenlänge nichttrivial. Alternativen bieten sich an:

Bedampfen eines Glasträgers mit einer Metallschicht und Pressen oder Ätzen der Vertiefungen in die Metallschicht.

Ätzen oder Pressen der Vertiefungen in einen Metallträger.

Ätzen oder Pressen der Vertiefungen in einen verformungsarmen metallisierten Kunststoffträger.

Um eine Absolutwinkelmessung zu ermöglichen, muß der Lichtstrahl in jeder Position mehrere Vertiefungen erfassen. Es ist dann bei gleichen Flächenanteilen des Vertiefungsbereichs und nicht vertieftem Bereich über den Strahldurchmesser in jeder Strahlposition destruktive Interferenz möglich. Da aufgrund der geforderten Winkelauflösung der Laserstrahl optimal fokussiert bleiben sollte, muß die Strukturgröße der Riefen auf ein Minimum verkleinert werden.

Ein Kodierungszustand besteht nun pro Bit Information geometrisch aus einem Streifenmuster und nicht mehr aus einer einzelnen Vertiefung. Die Gesamtfläche zu einem Bit wird als Rasterfeld bezeichnet. Die Flächensumme der Vertiefung pro Bit und die Flächensumme der nicht vertieften Bereiche pro Bit müssen näherungsweise gleich sein. Pro Bit Information muß mindestens eine Vertiefung vorgesehen werden, die in diesem Grenzfall die halbe Strahlfläche besitzen muß.

Jede Winkelstellung wird binär in einem Winkelwort kodiert, wobei jeder Bitposition der binären Winkelworte ein konzentrischer Kreisring der Scheibe und jedem Winkelwort ein Kreissegment der Scheibe zugeordnet ist. Jedes Bit eines Winkelworts ist in einem Rasterfeld kodiert. Die Rasterfelder werden in Umdrehungsrichtung durch Radialstrahlen und in radialer Richtung durch Umfangslinien begrenzt.

Jedes Rasterfeld ist für den einen Binärwert (z. B. 0) planar und für den anderen Binärwert (z. B. 1) von Riefen der Tiefe $\lambda/4$ durchzogen. In einer Ausführungsalternative werden die Riefen in radialer Richtung angeordnet, so daß die Beugungsmaxima höherer Ordnung nicht radial in Richtung anderer Spuren sondern tangential ausgelenkt werden.

Andere Ausführungsbeispiele verwenden Interferenz und Beugung am Gitter ohne Nutzung der Reflexion aus den $\lambda/4$-Vertiefungen, so daß die Vertiefungen nahezu beliebiges Tiefenprofil (außer planar) besitzen dürfen.

Die Rasterfelder dürfen auch Unterstruktur besitzen. Beispielsweise können die Streifenmuster global aus einer Spirale zusammengesetzt sein. Dabei ist allerdings darauf zu achten, daß keine höheren Beugungsordnungen entstehen, die radial benachbarte Phototransistoren beleuchten.

Als konkretes Ausführungsbeispiel werde die Kodierung auf eine Scheibe von Durchmesser 40 mm im Radiusbereich zwischen 15 mm und 20 mm aufgebracht. Für $2^{15}$ = 32768 Winkelstellungen werden incl. Redundanz 45 Spuren eingesetzt. Dann beträgt für ein Rasterelement der Radiusabschnitt 5/45 mm = 111 $\mu$m und der Umfang am äußeren Rand $2 \pi r/2^{15}$ = 3,83 $\mu$m bzw. am inneren Rand 2,88 $\mu$m. Daher sind die Rasterfelder mit einem Seitenverhältnis von ca. 37:1 in Radiusrichtung sehr langgestreckt.

Die vorliegende Erfindung macht von der Möglichkeit Gebrauch, Kompaktspeicherplatten als Kodierscheiben einzusetzen und deren hohe Anzahl von Informationsträgern bzw. Pits auszunützen. Es liegt auf der Hand, daß bei einem solchen Speichermedium, das auf irgendeinem der bekannten Laufwerke eingesetzt werden kann, Auflösungen erreicht werden, die bei bislang bekannten Verfahren nicht möglich waren. Ein weiterer Vorteil ist, die Variabilität der Einsatzmöglichkeiten, nämlich verschiedene elektrische Ausführungen in einem einzigen Gerät zu realisieren.

Wie bei bekannten Winkelkodierscheiben wird auch gemäß der Erfindung die Oberfläche der Scheibe in eine Vielzahl von einzelnen Feldern unterteilt. Diese Felder werden durch Radialstrahlen in Umfangsrichtung und durch Kreislinien bzw. Spirallinien in radialer Richtung begrenzt. Es gibt hierbei zwei Arten von Feldern, solche, die eine ebene Oberfläche aufweisen, d.h. ausgehend von der Herstellung der Scheibe nicht verändert worden sind, und Rasterfelder, die innerhalb ihrer Begrenzung einen Aufbau aufweisen, so daß ein in diesem Bereich hineingeleiteter Lichtstrahl gebeugt wird oder Interferenzen zeigt. In Umfangsrichtung oder in Spiralrichtung liegen mehrere derartiger Felder abwechselnd nebeneinander und können mit Hilfe eines Lichtstrahls und einer Fotodiode abgetastet werden. Für jede einzelne Spur ist ein solches System vorhanden. Ordnet man mehrere dieser Spuren in radialer Richtung nebeneinander an und stuft die Umfangserstreckung der Rasterfelder benachbarter Spuren im Faktor 1:2, so können mit einer Anzahl von Sensoren, die der Anteil der Spuren entspricht, jeder Drehstellung der Scheibe eine eindeutige mehrstellige Digitalzahl zugeordnet werden. Das Abtasten einer solchen Drehstellung ist nicht davon abhängig, daß sich die Scheibe in bezug auf die Lichtquelle dreht. Bereits in der Stillstandslage kann für jede einzelne Spur eine digital Zahl hergeleitet werden, die einer einzigen bestimmten Drehstellung der Scheibe entspricht.

Die Erfindung wird nachstehend anhand der Zeichnung beispielsweise erläutert.

Fig. 1     zeigt das Prinzip einer Audio-CD, wobei vier verschiedene Positionen des Lichtkegels in bezug auf die CD gezeigt sind.

Fig. 2     zeigt ein Streifenmuster im Verhältnis zu dem abtastenden Lichtkegel.

Fig. 3     zeigt die Verhältnisse im Zusammenhang mit der Beugung am Gitter.

Fig. 4     zeigt die Verhältnisse im Zusammenhang mit der Interferenz.

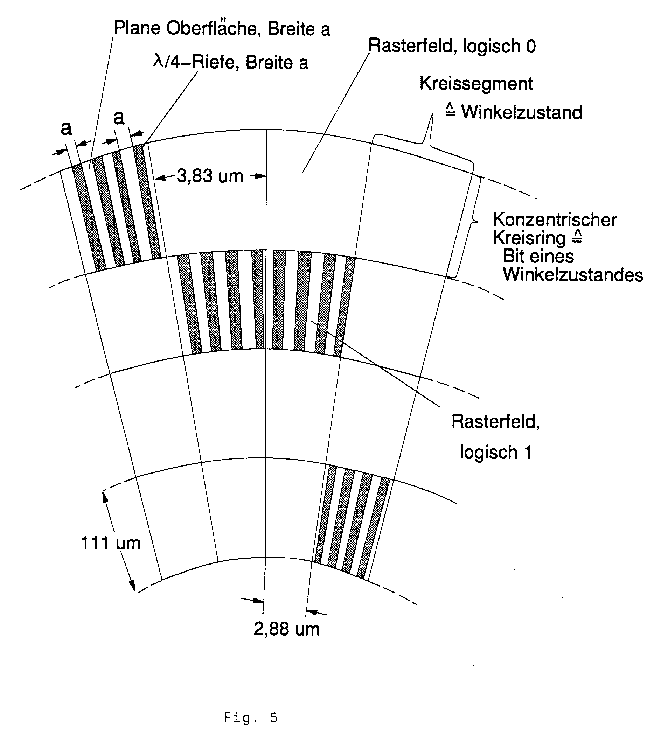

Fig. 5     zeigt eine schaubildliche Ansicht der Scheibe eines Winkelkodierers gemäß der Erfindung.

Fig. 6     zeigt eine schematische Darstellung einer anderen Art eines Drehimpulsgebers gemäß der Erfindung.

Fig. 7     zeigt eine abgewandelte Ausführungsform des Drehimpulsgebers nach Fig. 6.

Für absolute Winkelmessung ist es erforderlich, abweichend vom Prinzip der Audio-CD in jeder Winkelstellung der kodierten Scheibe im ruhenden Zustand Informationen auslesen zu können.

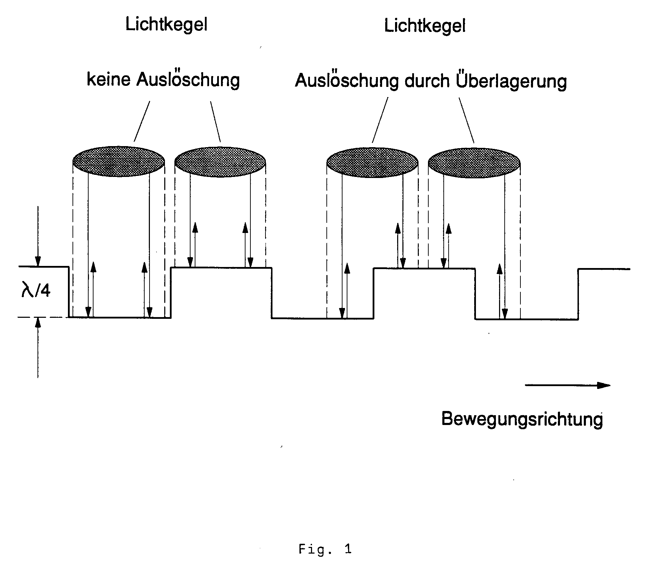

Das Prinzip der Audio-CD ist in Fig. 1 skizziert. Die Vertiefungen sind exakt $\lambda/4$ tief, so daß sich Auslöschung ergibt, sobald der Lichtstrahl zur Hälfte in die Vertiefung trifft. Dies ist jedoch nur kurz beim Eintritt in die Vertiefung und beim Verlassen der Vertiefung der Fall und für statische Auslesung somit ungeeignet.

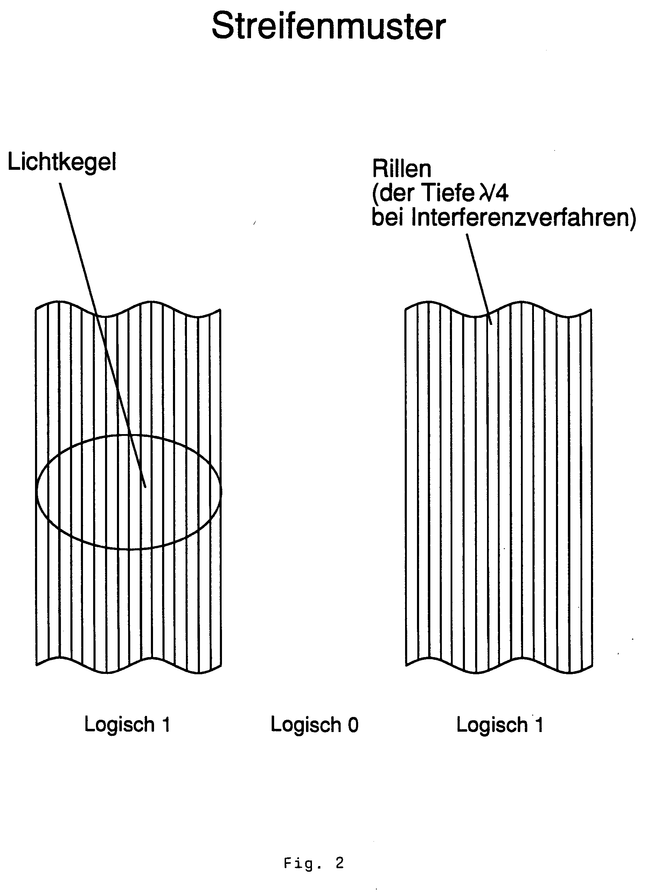

Der Vorschlag gemäß der Erfindung ist nun, die kodierte Scheibe für den einen logischen Zustand mit einem Streifenmuster zu versehen und für den anderen logischen Zustand als plane Fläche zu belassen. Die Streifenbreite darf maximal gleich dem halben Strahldurchmesser sein (Fig.2).

Ordnet man die Streifen in radialer Richtung an, so kann man längs des Radius der Scheibe mehrere Spuren der Scheibe gleichzeitig auslesen. Dafür ist der Abstand der Streifen am äußeren Rand größer als am inneren Rand des kodierten Bereichs.

Es gibt nun zwei Realisierungsvorschläge zur Auslesung der Information. Der erste beruht auf $\lambda/4$-Vertiefungen und Interferenz, der andere auf Beugung am Gitter.

Beugung am Gitter

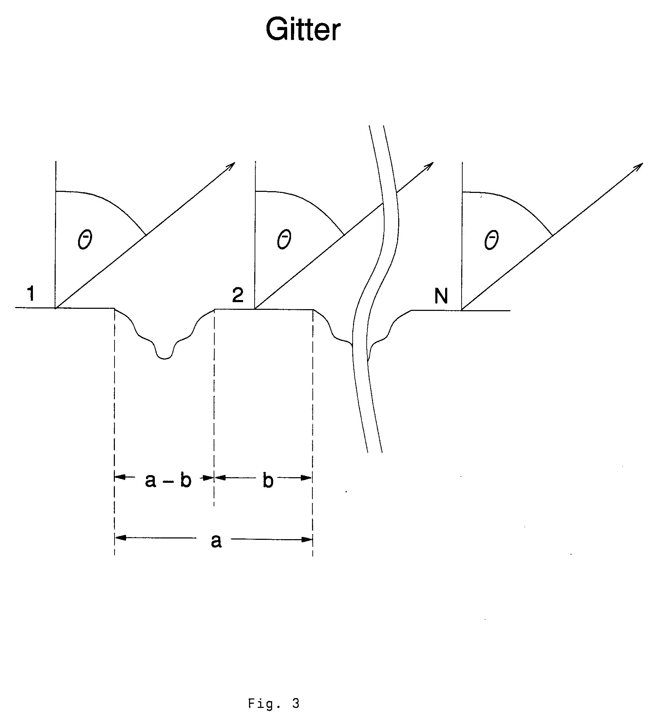

Realisiert man die CD-Oberfläche nach Fig. 3 als Gitter, so wird das Licht an der planen Oberfäche reflektiert und unterliegt den Gesetzen von Beugung und Interferenz. Für die Intensität gilt

$$I = I_0 \left[ \frac{\sin(\pi b \sin\theta/\lambda)}{\pi b \sin\theta/\lambda} \right]^2 \left[ \frac{\sin(N\pi a \sin\theta/\lambda)}{\pi a \sin\theta/\lambda} \right]^2$$

Der erste Klammerausdruck beschreibt die Beugung für jeden erhabenen Gittersteg und der zweite die Interferenz zwischen den N Gitterstegen. Beobachtet wird in Richtung der ersten Beugungsordnung, und zwar Dunkelheit ohne Gitter sowie Helligkeit oberhalb von Gitterbereichen. Die Intensität im Maximum beträgt allerdings nur 4,5 % der Intensität in 0.Beugungsordnung.

Interferenz an $\lambda/4$-Vertiegungen

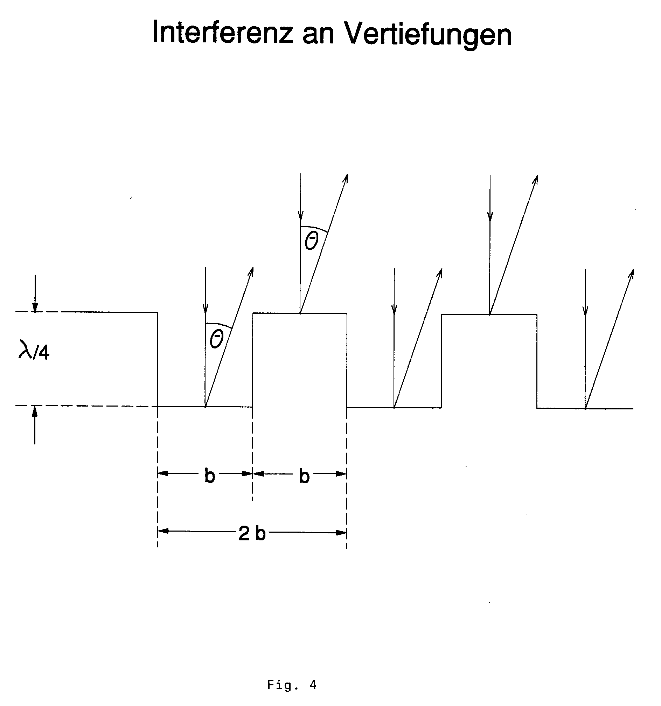

Alternativ kann die Interferenz an Vertiefungen nach Fig. 4 ausgewertet werden. Der Ausdruck für die Intensität lautet nun

$$I = I_0 \left[ \frac{\sin(\pi b \sin\theta/\lambda)}{\pi b \sin\theta/\lambda} \right]^2 \left[ \frac{\sin(2N\pi b \sin\theta/\lambda)}{2\pi b \sin\theta/\lambda} \right]^2 \cos^2 \frac{\pi(1+\cos\theta)}{4}$$

Die ersten beiden Klammerausdrücke beschreiben wiederum Beugung und Interferenz am Gitter. Der dritte Term führt jedoch zu Auslöschung oberhalb des Gitters. Oberhalb planer Bereiche ergibt sich dagegen Helligkeit.

Der Beobachtungswinkel $\theta$ ist bezüglich der Auslöschung unkritisch. Die Intensität beträgt selbst unter 45° nur 5%.

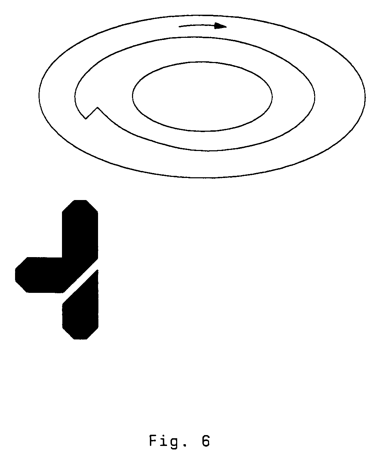

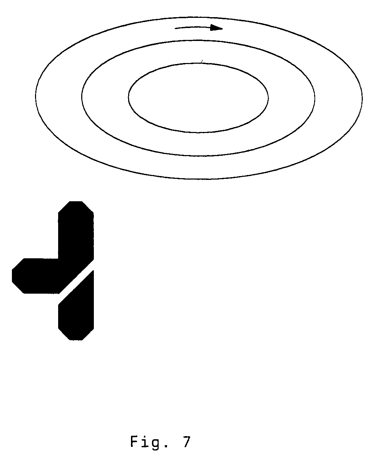

In der Mitte der Figuren 6 und 7 sind eine Kompaktspeicherplatte und ein Laser gezeigt. Bei der in Fig. 6 gezeigten Ausführungsform findet die Abtastung von innen nach außen statt. wobei die Spur mit den Pits als Spirale ausgebildet ist.

Bei der in Fig. 7 gezeigten Ausführungsform ist der Laser feststehend, die verwendete Spur ist ein konzentrischer Ring.

In den Figuren 6 und 7 ist schematisch das Abnahmesystem mit Sensor, halbdurchlässigem Spiegel und Laser gezeigt, es handelt sich hierbei um irgendein bekanntes System, das daher nicht weiter beschrieben werden muß.

**Patentansprüche**

1. Winkelkodierer bzw. Winkelstellungsgeber, aufweisend eine Scheibe mit Rasterstrukturen zur Abtastung durch ein Lichtkegel, dadurch gekennzeichnet, daß für jede Position bzw. für jedes Bit ein Rasterfeld vorgesehen ist, dessen Rasterstruktur feiner als der Strahldurchmesser des auslesenden Lichtstrahls ist, und daß die Rasterfelder jeweils in einer von zwei möglichen Streifentexturen für die logischen Zustände 1 und 0 ausgebildet sind, wobei diese Strukturen sich in ihren Eigenschaften bezüglich Interferenz und/oder Beugung deutlich voneinander unterscheiden.

2. Winkelkodierer bzw. Winkelstellungsgeber nach Anspruch 1, dadurch gekennzeichnet, daß die ebenen Flächen der Rasterfelder für den Zustand 0 und die Gittermuster für den Zustand 1 ausgewählt sind.

3. Drehimpulsgeber zur Ausgabe eines einem Drehwinkel entsprechenden Zahlenwertes für Steuer- und Regelorgane, gekennzeichnet durch eine Kompaktspeicherplatte mit einer in sich geschlossenen Rille mit einer Vielzahl von Pits, vorzugsweise 100000 auf der Umfangslänge der Rille, durch ein Kompaktspeicherplattenwerk mit opto-elektronischen Abnahmesystem, das die Pits bewegungslos mit einem fokussierten Laserstrahl abtastet, und durch einen Wandler, der das vom Abnahmesystem erhaltene Signal in Drehwinkelwerte umwandelt und ausgibt.

Fig. 1

# Streifenmuster

Lichtkegel

Rillen
(der Tiefe ⋌/4
bei Interferenzverfahren)

Logisch 1          Logisch 0          Logisch 1

Fig. 2

# Gitter

Fig. 3

# Interferenz an Vertiefungen

Fig. 4

Fig. 5

Fig. 6

Fig. 7

Europäisches
Patentamt

# EUROPÄISCHER RECHERCHENBERICHT

Nummer der Anmeldung

EP 94 11 1913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 096 476 (BENSON INC.)<br>* Einführung *<br>* Seite 3, Zeile 27 - Seite 9, Zeile 16; Abbildungen 1-7B *<br>* Seite 10, Zeile 25 - Seite 11, Zeile 17; Abbildung 9 *<br>--- | 1-3 | G01D5/38<br>G01D5/34 |
| X | SENSORS AND ACTUATORS,<br>Bd.A32, Nr.1/3, April 1992, LAUSANNE, CH<br>Seiten 575 - 581<br>C. DURING, S. ANDERSSON, J. WILKANDER<br>'Non-contact absolute position measurement using a compact disc player optical pick-up'<br>--- | 1-3 | |
| X | EP-A-0 390 092 (CANON K.K.)<br>* Spalte 2, Zeile 39 - Spalte 8, Zeile 24; Abbildungen 1A-7 *<br>--- | 1-3 | |
| A | FR-A-2 075 408 (ERNST LEITZ G.M.B.H.)<br>* Seite 2, Zeile 38 - Seite 4, Zeile 24; Abbildung 1 *<br>--- | 1 | RECHERCHIERTE SACHGEBIETE (Int.Cl.6) |
| A | US-A-3 482 107 (ERNST LEITZ G.M.B.H.)<br>* Spalte 5, Zeile 34 - Spalte 6, Zeile 63; Abbildung 2 *<br>----- | 1 | G01D |

Der vorliegende Recherchenbericht wurde für alle Patentansprüche erstellt

| Recherchenort | Abschlußdatum der Recherche | Prüfer |
|---|---|---|
| DEN HAAG | 28. November 1994 | Visser, F |